# EUROPEAN PATENT APPLICATION

(11) **EP 4 272 952 A1**
(43) Date of publication of application: **08.11.2023**
(21) Application number: 22171579.0
(22) Date of filing: 04.05.2022
(51) Int. Cl.: B32B 7/12, B32B 27/08, B32B 27/18, B32B 27/22, B32B 27/30, B32B 27/36, C08J 5/18

(54) **POLYMER MULTILAYER**

(71) Applicant: B&T Entwicklungs- und Vermarktungsgesellschaft mbH, 22297 Hamburg (DE)
(72) Inventor: BALKAU, Werner, 8762 Glarus-Süd/Schwändi (CH); KRONAWITTLEITHNER, Kurt, 8810 Horgen (CH); STEIN, Robert, 24576 Bad Bramstedt (DE); LÜHMANN, Bernd, 22844 Norderstedt (DE); DÖHMEN, Ben, 20144 Hamburg (DE); STIEGLER, Sabrina, 91086 Aurachtal (DE); WICHE, Marius-Konstantin, 22763 Hamburg (DE); KÖLLING,Kristina, 22529 Hamburg (DE)
(74) Representative: Frei Patent Attorneys

(57) **Abstract**

A multilayer comprises at least one first layer and at least one second layer. The first layer comprises a water-soluble polymer, wherein the first layer has an oxygen barrier. Furthermore, the first layer comprises a salt. The salt can act as a lubricant. The second layer has a water vapor and/or humidity barrier. The multilayer can offer a high barrier-performance with respect to oxygen permeation and permeation of water / humidity. This enables for a broad applicability of the multilayer in various areas as e.g. in packing, in particular for food packing, in particular for packing coffee.

## Description

The invention relates to the field of polymer multilayers. It relates to a multilayer and a method for producing a multilayer as described in the preamble of the independent claims.

The present and existing packing materials suitable for sensitive products like coffee, cereals, cheese, meat, detergents, skincare products, and/or chocolate typically consist of multilayer films or multilayer architectures like e. g. PET/Alu/PE or Paper/PET/Alu/PE.

Respective multilayer materials are known to be not recyclable within cost efficient existing recycling streams, which are moreover energetically or chemically complex. One reason for this is, that the layers, mostly made from very different materials, are irreversibly bonded together. Consequently, the available mechanical recycling processes are not able to separate the individual layers.

One disposal method for respective multilayers is thermal treatment, i. e. burning. In case of countries with no existing disposal systems or where landfill deposition is a common, these multilayer structures may maintain virtually unchanged for several hundred years (see for instance W. Feng et. al. Progress in Polymer Science 117 (2021) 101395).

An important topic in hot-melt processing of vinyl alcohol rich polymers is that these are prone towards thermally induced degradation, this due to the fact, that the difference between their crystal melting temperature and their degradation temperature is often negative, i.e. degradation takes already place prior to complete melting of the crystalline polymer parts. One approach to solve such problem is to use co-polymers like Ethylene-Vinylalcohol Copolymers (EVOH) or Butenediol-Vinylalkohol-Copolymers (BVOH) or vinyl acetate-vinyl alcohol co-polymers with a sufficient amount of vinyl acetate (VAc) comonomer (typically above approx.. 15% VAc). The incorporated comonomers reduce the melting temperature in comparison to the PVOH homopolymer, resulting in an elimination or at least significant reduction of thermal decomposition. Often PVOH with a high vinyl alcohol comonomer content is however to be preferred, this to achieve highest barrier performance or water dissolution only at elevated temperatures.

Several approaches to hot-melt process PVOH of high vinyl alcohol content in formulations try to solve such problem by special processing means or via specific additivities. Examples include EP 0 415 357 (special formulations applying phosphoric acid as plasticizer which allows for reduced polymer degradation when hot-melt processed); US 10,316,120 (processing aid water within the extrusion process allows for fast dissolution and addition of plasticizer; the water is removed during the hot-melt extrusion process, leaving plasticized PVOH); GB 2501607 (Addition of a hygroscopic salt).

It is therefore an object of the invention to provide a multilayer, which overcomes the disadvantages of the prior art.

These objects are achieved by a multilayer and a method to produce a multilayer as well as the use of the multilayer for packing and a packaging comprising the multilayer.

A multilayer comprises at least one first layer and at least one second layer. The first layer comprises a water-soluble polymer, wherein the first layer has an oxygen transmission barrier.

Furthermore, the first layer comprises a salt. The salt can act as a lubricant.

The salt can be essentially present as solid material. The solid salt can be embedded in the water-soluble polymer of the first layer. The salt may also be partly or fully soluble in the polymer.

The second layer has a water vapor and/or humidity barrier.

In selected embodiments, the water-soluble polymer is cold soluble, meaning that the water-soluble polymer is soluble in cold water. The water-soluble polymer can be soluble in water at a maximum temperature of 40 °C, in particular of 38°C to the most, in particular of 35°C to the most, in particular of 30°C to the most. Such a solubility in water enables an integration of the multilayer e. g. in a paper recycling cycle, in particular in paper recycling according to DIN EN 13430 (as of the end of 2021).

The multilayer, in particular the first layer can have an oxygen transmission rate of a maximum of 3 cm³/m² per day at room temperature (RT, room temperature = 23°C) and a relative humidity of 50% (relative humidity = r. h.), in particular the oxygen transmission rate can be maximal 1 cm³/m² per day at room temperature and a relative humidity of 50%, in particular maximal 0,2 cm³/m² per day at room temperature (23°C) and a relative humidity of 50%; in particular maximal 0,05 cm³/m² per day at room temperature (23°C) and a relative humidity of 50%.

The oxygen transmission rate (OTR) is the steady state rate at which oxygen gas permeates through a film at specified conditions of temperature and relative humidity. Values are expressed in cc/m²/24 hr in metric (or SI) units, with cc being cubic centimetre being cm³, m² being square metre, 24 hr being 24 hours being one day. The OTR in this text is determined according to ISO 15105-2 (as of April 2022).

The multilayer, in particular the second layer, can have a water vapor and/or humidity barrier of a maximum of 15 g/m² per day at 23°C and a relative humidity of 85%, in particular a maximum of 10 g/m² per day at 23°C and a relative humidity of 85%, in particular 7 g/m² per day at 23°C and a relative humidity of 85%, in particular a maximum of 3 g/m² per day at 23°C and a relative humidity of 85%, in particular a maximum of 1 g/m² per day at 23°C and a relative humidity of 85%, in particular a maximum of 0.5 g/m² per day at 23°C and a relative humidity of 85%, in particular a maximum of 0.1 g/m² per day at 23°C and a relative humidity of 85%.

The water vapor and/or humidity barrier in this text is determined according to ISO 15106-2 (as of April 2022).

The multilayer can offer a high barrier-performance with respect to oxygen permeation and permeation of water / humidity. This enables for a broad applicability of the multilayer in various areas as e.g. in packing, in particular for food packing, in particular for packing coffee.

The multilayer can have a barrier-performance with respect to oxygen permeation, CO₂ permeation, nitrogen permeation and/or permeation of water / humidity. The applied multilayer can thus achieve extended product storage time, when e. g. used in packaging.

The strategy behind respective multilayer architectures is to provide more than one material specific property, not possible to be realized by sole application of one single material, e. g. the realization of good oxygen transmission barrier, water barrier, CO₂ barrier and aroma barrier properties for e. g. the packaged good.

The water-soluble polymer of the first layer can comprise a polymer that has a plurality of vinyl alcohol [CH2CH(OH)] groups in the polymer chain, in particular wherein the water-soluble polymer is poly(vinyl alcohol) (PVOH).

The water-soluble polymer can be at least one of:
- poly(vinyl alcohol) (PVOH),
- cellulose-ether polymer,
- Butenediol-Vinylalcohol-Copolymer (BVOH), and
- Ethylene-Vinylalcohol-Copolymers (EVOH).

The water-soluble polymer can comprise at least one vinyl-alcohol copolymer and/or a mixture and/or blend of two or more vinyl-alcohol copolymers. The copolymers can differ in molar mass, molecular architecture, e. g. branching, comonomer type and amount, to name only a few variation parameters.

The water-soluble polymer can comprise further polar comonomers. Examples include maleic acid and maleic acid anhydride, fumaric acid and itaconic acid.

The PVOH can be a vinyl alcohol rich copolymer and/or vinyl alcohol homopolymer. The water-soluble polymer, in particular the polyvinyl alcohol (PVOH), can have a degree of hydrolysis of 70% to 99,9%. The degree of saponification can control the performance to the oxygen transmission barrier. A higher saponification may for instance improve the oxygen transmission barrier performance.

A vinyl-alcohol containing polymer can comprise >75%, in particular >90%, monomer units carrying an OH unit.

The first layer can comprise at least one of the following polymers:
- Poly(vinyl alcohol) obtained e.g. by the saponification of Poly(vinyl ester) homopolymers or copolymers,
- Ethylene-Vinylalcohol-Copolymers (EVOH),
- Butenediol-Vinylalcohol-Copolymer (BVOH),
to name only a few.

The first layer can comprise at least one vinyl-alcohol copolymer and/or a mixture and/or blend of two or more vinyl-alcohol containing homopolymers or copolymers. The homopolymers and/or copolymers can differ in molar mass, molecular architecture, e. g. branching, comonomer type and amount, to name only a few variation parameters.

The molar mass of the polymers can be varied widely, this, for instance, to optimize product performance with respect to thermal and mechanical performance of the final products or with respect to manufacturing conditions. Typical values may be between 10 kD (kilo Dalton) and 150 kD, in particular between 15 kD and 100 kD, in particular between 20 kD and 75 kD. Quite often viscosity data, most often of a 4% solution of the polymer in water, may be used instead of molar mass, e. g. for Mowiol 4-88 (88% degree of sonification; viscosity of 4 mPa sec in aqueous solution at 20°C) a molar mass of approximately 31 kD is given.

The water-soluble polymer can comprise further polar comonomers. Examples include maleic acid and maleic acid anhydride, fumaric acid and itaconic acid.

The salt can comprise a salt of an alkaline metal, an earth alkaline metal, aluminum containing salt and/or a mixture thereof, in particular NaCl, Na-citrate, and the respective potassium analogues and/or a mixture thereof.

The addition of salts can enhance the melt flow index (MFI), hence improving hot-melt processability of the formulations. It can also improve solubility, disintegration, and bio-degradation speed e. g. for composting.

The first layer can comprise at least 1% or at least 2% or at least 3% or at least 10% or at least 15% or even at least 20% or at least 25% with a maximum amount being 55% or 40% or 35% salt. In the present text, all percentages refer to % by weight unless specified otherwise.

The first layer can comprise 1-40 wt% of salt, in particular 2-30 wt% of the salt.

The first layer can comprise at least 15 wt% of salt.

The salt content can improve the processability of the first layer.

The salt content of the first layer can also be specified in Vol%. The unit Vol% can be recalculated from the wt% using the density of the salt and the components of the first layer.

The first layer can comprise salt with least 1 Vol% or at least 2 Vol% or at least 3 Vol% or at least 10 Vol% or at least 15 Vol% or even at least 20 Vol% or at least 25 Vol% with a maximum amount being 55 Vol% or 40 Vol% or 35 Vol%.

The first layer can comprise a vinyl-alcohol copolymer comprising 1 to 25 mol% of a comonomer not being vinyl alcohol.

The first layer can comprise an inorganic filler. The inorganic filler can be a clay mineral, in particular bentonite, montmorillonite, to name only a few. The inorganic filler can be a single metal or mixed metal carbonate, in particular calcium carbonate including precipitated calcium carbonate. The inorganic filler can be a silica, in particular fumed silica.

The first layer can comprise an organic filler. The organic filler can be cellulose, cellulose derivatives like cellulose esters, cellulose ethers etc., lignocellulose and/or a mixture thereof, in particular low molar mass oligomers of the same. The organic filler can be starch and starch derivatives, in particular low molar mass oligomers of the same. The organic filler can be Chitin, Chitosan and derivatives thereof. The organic filler can be coffee silverskin.

In embodiments, the first layer comprises a minimum of 35 wt% of one or more respective vinyl alcohol rich copolymers.

The first layer can comprise comonomers not comprising an OH-unit. Such comonomers can be integrated in the polymer in form of blocks or in a random manner or in any statistical manner in-between. A more stochastic distribution is typically preferred.

The molar mass of the water-soluble polymer can be varied widely, this, for instance, to optimize product performance with respect to thermal and mechanical performance of the final products or with respect to manufacturing conditions.

The first layer has a maximum water content of 10%, for example a water content of not more than 5%, especially of not more than 1% or not more than 0.5%.

The first layer can comprise an additive. The additive can be selected from at least a plasticizer, a stabilizer and a processing aid.

The plasticizer can be a liquid or a solid. The plasticizer can be partially or fully soluble in the base polymer. The plasticizer can be hygroscopic. The plasticizer may be selected from the group consisting of polyols (oligo- and polyhydroxy compounds), low molecular weight amides, in particular of triols, diols, polymeric-triols, polymeric-diols, for example glycerine, ethylene glycol, propylene glycol, triethylene glycol, lower molecular weight polyethylene glycols; and lower molecular weight amides. In certain embodiments, the plasticizer may be selected from the group consisting of dipropylene glycol, higher oligomers of ethylene glycol or propylene glycol, butylene glycol, glycerol, pentaerythritol, sorbitol, 1,4-Monoanhydrohexitols, 1,4-3,6-dianhydrohexitols as well as esters of the same. Preferred plasticizers are glycerine, and polypropylene glycol. Glycerine or other plasticizer may be present in an amount of between 2% and 25%, especially between 5% and 18%.

The salt can be provided in a higher percentage by weight than the plasticizer. The ratio of salt to plasticizer can be 1.25-12:1, in particular 1.25-7:1, in particular 1.4-5-5:1, in particular 4-5:1.

The stabilizer can be a primary antioxidant, a secondary antioxidant, in particular a phosphite, thio-ester and/or C-radical scavenger. The stabilizer can be UV-stabilizer. It can be applied for stabilization during processing and/or storage and/or use.

The processing aid can be a long chain aliphatic acid, metal salt of the same and/or derivatives of the same, for instance esteramides or esters.

The second layer can comprise at least one of the following components:
- polyester
- aliphatic polyester
- poly(hydroxy alkanoates) (PHAs)
- polylactic acid (PLA)
- polybutylene succinate (PBS)
- poly(hydroxy butyrates) (PHB), in particular Poly(3-hydroxy butyrate) as well as
- copolymers containing 3-hydroxybutyrate as comonomer.

The polyester can be obtained by polycondensation of one or more diacids and one or more polyols, in particular resulting in poly(alkylene succinates), like Poly(ethylene succinate), Poly(propylene succinate), Poly(butylene succinate), in Poly(alkylene adipates), Poly(ethylene furanoates), and co-condensates thereof. The resulting polyester can contain < 20% aromatic moieties. In particular the polyester does not contain aromatic moieties.

The polyester can be obtained by polycondensation of one or more hydroxy-carboxylic acids.

The polyester can be obtained by ring opening homo- or copolymerization of one or more cyclic lactones, in particular Polyglycolide (K. Yamane et. al. "Development of an industrial production technology for high-molecular-weight polyglycolic acid", Polymer Journal (29014) 46, 769-775), Poly(lactic acid), Polycaprolactone, to name only a few. The polyester can as well be a copolymers thereof.

The polyester can be based on one or more poly(hydroxy alkanoates) (PHAs) obtained from bio-source by fermentation and optionally subsequent modification. See for instance: Biotech. Progr. 2018, Vol. 34, No. 1 "Polyhydroxyalkanoates: Properties and Chemical Modification Approaches for Their Functionalization".

The polyester can comprise short chain (sc) PHAs (typically comprising up to 5 carbon atoms within the monomer units), in particular Poly(hydroxy propionate), poly(hydroxy butyrates) (PHBs) and poly(hydroxy valeriates). Poly(hydroxy alkylates) can occur in form of one or more chemically different isomers. In particular Poly(hydroxy butyrate) can be used in form of Poly(3-hydroxy butyrate) and/or Poly(4-hydroxy butyrate).

The polyester can comprise medium chain (mc) PHAs (comprising 6 to 14 carbon atoms per monomer unit), in particular Poly(3-Hydroxy hexanoate), and can also be applied in form of their homopolymers or copolymers. Short chain alkanoates and medium chain alkanoates can be present in respective copolymers.

To adjust physical parameters, like glass transition temperature (Tg), melting temperature (Tm), etc. of the polyester, these may contain specific amounts of comonomers or may be blended with each other. Examples include 3-hydroxy butyrate rich copolymers, which may incorporate 4-hydroxy butyrate or 3-hydroxy valerate or 3-hydroxy hexanoate as comonomer, to name only a few options. Also, terpolymers and higher copolymers and blends of more than two polyester can be used. Typically, the melting point of suitable polyester will be sufficiently above the maximal application temperature. It also needs to withstand the application pressure under respective temperature. Typically, the melting temperature of the majority of the crystalline part of the polymer will be at least 5 K above such application temperature, more preferably more than 10 K above such application temperature.

The homo- and/or copolyester can comprise at least to an extent of 80 wt.% of aliphatic units.

The homo- and/or copolyester can be made from aliphatic building blocks by 90 wt.%. In particular the homo- and/or copolyester can be solely made from aliphatic building blocks.

In addition to ester moieties copolyester can comprise further polar moieties, in particular polycarbonate units, polyurethane units, polyamide units, to name only a few.

The second layer can also be water-soluble. The solubility of the second layer in water might be lower that the water solubility of the first layer.

The second layer can comprise an additive. The additive can be at least one of a plasticizer and a stabilizer and a nucleating agent.

The plasticizer can similar to the plasticizer of the first layer be a liquid or a solid. The plasticizer can be partially or fully soluble in the base polymer. In particular the plasticizer can be trialkyl citrates, like triethyl citrate and epoxidized soybean oil, to name only a few. Selected further examples are e. g. given in V. Jost et. al.; European Polymer Journal 68 (2015) 302-312.

The stabilizer can be a primary antioxidant, secondary antioxidant, C-radical scavenger and/or UV-stabilizer. Stabilizers can be applied for stabilization during processing and/or storage and/or use.

Carbodiimides and Poly(carbodiimides) can be applied as water scavengers. They can be used in combination with phosphite based secondary antioxidants.

A nucleating agent can be applied. The nucleating agent can be selected from Handbook of Nucleating Agents, 2nd Ed. (ChemTec Publishing, Toronto 2021).

In an embodiment, at least one of the first layer and the second layer can be bio-degradable, in particular the first layer is bio-degradable.

While water-soluble polymers may be bio-degradable, this is not necessarily the case for all water-soluble polymers. The water-soluble polymer of the multi-layer may be bio-degradable in addition to being water-soluble.

In the present text, "bio-degradable" may mean biologically degradable according to the European standard EN 13432 (as of the end of 2021). In addition, or as an alternative, it may mean biologically degradable according to the European standard EN 14995 (as of the end of 2021). Thus "bio-degradable" especially refers to "biologically degradable according to EN 13432 and/or according to EN 14995.

In an embodiment, the first layer and/or the second layer can be bio-degradable in at least one of soil, water, waste water.

As far as in the present text water-soluble polymers are mentioned, such water-soluble polymer may optionally be (bio-)degradable in sewage treatment plants (aerobic biodegradability) in accordance with EN ISO 9888 (as of the end of 2021); determined in accordance with the so-called Zahn-Wellens test, in particular at 20°C.

Due to this the multilayer provides sufficient barrier properties for example for sensitive food products, and which simultaneously is compatible with existing recycling streams. In regions without such recycling streams or where landfill is common, the multilayer is neutral to the environment and decomposed in short time into carbon dioxide (CO2) and water (H2O) as well as biomass.

Multilayer made of bio-degradable plastics in addition often contain a significant share of fossil feedstocks (mostly they contain 50-60 %, in selected cases up to 80% biobased plastics). With the present invention a bio-degradable multilayer can be provided.

Multilayer made of bio-degradable plastics according to the prior art sometimes show low barrier performance esp. against oxygen and water vapor as well as low head deforming stabilities.

The multilayer can be compostable, in particular home compostable. At least one of the first layer and the second layer can be compostable, in particular home compostable.

Bio-degradation in the context of this text means the breakdown of the polymers of multilayer by microorganisms. Bio-degradability means that a material must have degraded to more than 90 percent to water, carbon dioxide (CO2) and biomass after a specified time under defined specific temperature, oxygen and humidity conditions in the presence of microorganisms or fungi.

The term compostable refers to a bio-degradation under specific conditions.

In order for the multilayer, in particular the first layer and/or the second layer, to be compostable, at least the following conditions can be fulfilled:
- at least 90% of the organic material must be verifiably bio-degraded in CO2 within 6 months;
- after 3 months of composting and subsequent screening through a 2 mm mesh sieve, no more than 10% residue of the original mass may remain;
- there must be no negative effects on the composting process in general;
- no negative effect of the resulting composts on plant growth (agronomic test) and/or ecotoxicity test;
- the maximum concentration of heavy metals (Cu, Zn, Ni, Cd, Pb, Hg, Cr, Mo, Se,

As) and florins must not be exceeded.

During composting the multilayer, in particular at least one of the first layer and the second layer can be decomposed. The multilayer, in particular at least one of the first layer and the second layer can be composted and/or decomposed in a short time to carbon dioxide (CO2) and water (H2O) and biomass.

The multilayer, in particular at least one of the first layer and the second layer can be industrial and/or home compostable. The home compostability may not negatively influence the industrial composting process.

In the present text, "compostable" or "home compostable" means compostable or home compostable according to the European standard EN 13432 (as of the end of 2021) for packaging and/or according to the European standard EN 14995 (as of the end of 2021) for plastics/synthetic materials.

In order for the multilayer, in particular the first layer and/or the second layer, to be home compostable, at least the following conditions must be fulfilled:
- at least 90% of the material must have decomposed into water, carbon dioxide and biomass in a compost heap (at approx. 30°C) within 6 months;
- neither organic pollutants nor heavy metals may enter the soil;
- the substances must not have any negative impact on the compost quality;
- the products can be disposed of in the garden compost and in the organic waste bin.

The multilayer can comprise a sealing layer.

The sealing layer can essentially be identical or similar to at least one of the second layer and first layer.

The sealing layer can comprise at least one of the following components:
- polyester;
- polyurethane(s);
- polycarbonate(s);
- aliphatic polyester;
- poly(hydroxy alkanoates) (PHAs);
- vinyl alcohol rich copolymer and/or homopolymer,
- Poly(vinyl alcohol) (PVOH), Ethylene-Vinylalcohol (EVOH) and/or Butenediol-Vinylalcohol (BVOH), in combination with one or more salts.

The sealing layer can have a chemical composition which is similar or identical to the one of the water vapor barrier layer, namely the second layer.

The multilayer can comprise a tie layer for promoting adhesion between the first layer and the second layer.

The tie layer can also be called adhesion promotion layer. The tie layer can enhance the inter-layer adhesion, meaning it enhances the adhesion between adjacent layers of the multilayer.

In certain applications the adhesion between adjacent layers may not be sufficient for the desired application, needing improvement. Enhanced inter-layer adhesion may be realized by adding adhesion promoting additives into one or both adjacent layers not exhibiting sufficient inter-layer adhesion, or by chemical modification of the base polymers used in the individual layers.

Examples for the chemical modification of base polymers constituting the individual layers include at least one of the following:
- The usage of hydrophilic, for instance acid-modified PHAs. One example constitutes maleic-acid anhydride (MAA) modified PHA. Such modification of PHAs typically enhances the adhesion towards the highly polar vinyl-alcohol containing copolymers (Lit.: F. Wu, M. Misra and A.K. Mohanty - Progress in Polymer Science 117 (2021) 101395).
- Another example is hydrophobically modified poly(vinyl alcohol) copolymers, e.g. by incorporation of long-chain aliphatic side chains. Such hydrophobic modification reduces the polarity of the vinyl-alcohol containing copolymer, typically enhancing inter-layer adhesion towards the PHA-layer.

To achieve the desired inter-layer adhesion one or both of the adjacent layers may be modified.

Examples of adhesion promoting additives for the tie layer can comprise blending the base polymer used in one of the layers into the adjacent second layer. Blends typically contain less than 50% of the base polymer of the adjacent layer in the first or second layer. One or both adjacent layers may be modified respectively.

Enhanced inter-layer adhesion may also be achieved by incorporation of specific adhesion layers, also referred to as tie-layers, between two adjacent layers, not exhibiting sufficient adhesion towards each other. Examples of adhesion promoting layers (tie-layers): can comprise at least one of:
- Blends of the base polymers used in adjacent layers. Blends may use 5 wt.% to 95 wt.% of the base polymers used in adjacent layers. In particular blends may use 10 wt.% to 90 wt.% of the base polymers used in adjacent layers. In particular blends may use 20 wt.% to 80 wt.% of the base polymers used in adjacent layers.
- Nippon Gohsei's BTR-8002P bio-degradable adhesion promoting layer or similar material may be used as adhesion promoting layer.
- Further options include Cellulose alkyl ester with degrees of alkylation between 0.5 and 1.5 as well as Ethylene-Vinylalcohol copolymers.

Enhanced interlaminate adhesion can also be achieved by
- Hydrophobic Treatment applied to the PVOH, e. g. via treatment with long chain aliphatic silanes (see e.g. Markus Schmid et. al.; Polymers 2014, 6, 2764-2783; doi:10.3390/polym6112764)
- a hydrophilic treatment applied to PHA

The layers of the multilayer can be at least partially separable from each other.

According to the state-of-the-art multiple layers of chemically similar material is irreversible bound to each other. The resulting material can also be called mono-material. Such a mono-material is difficult to impossible to recycle. In contrast to that the layer of the present multilayer can be separated from each other and can be recycled individual.

In embodiments, the layer of the multilayer can be separated from each other under the conditions of the recycling process. In particular the layer are separable at a maximum temperature of 40 °C, in particular of 38°C to the most, in particular of 35°C to the most, in particular of 30°C to the most, in an aqueous environment.

Examples of suitable polymer compositions of the first layer may for example be found in WO 2014/155059.

The multilayer can comprise a printing layer. The printing layer can be a layer onto which ink can be applied.

The multilayer can have a thickness of 30 to 3000 micrometer, in particular at least 30 micrometre or at least 50 or at least 100 micrometre or at least 150 micrometre or even at least 300 micrometer. The maximum thickness of the multilayer can be 100 micrometer or 120 micrometer or 150 micrometer or 200 micrometer or 300 micrometer or 1000 micrometer or 1500 micrometer or 3000 micrometers to the most. The first layer can have a thickness of 2 micrometer to 1500 micrometer. The first layer can have a thickness of at least 2 micrometer or at least 3 micrometer or at least 5 micrometer or at least 10 micrometer or at least 20 micrometer or at least 500 micrometer or at least 700 micrometer or at least 1000 micrometer. The maximum thickness of the first layer can be 20 micrometer or 40 micrometer or 50 micrometer or 70 micrometer or 100 micrometer or 200 micrometer or 500 micrometer or 1000 micrometer or 1500 micrometer to the most.

The second layer can have a thickness of 2 micrometer to 1500 micrometer. The second layer can have a thickness of at least 2 micrometer or at least 3 micrometer or at least 5 micrometer or at least 10 micrometer or at least 20 micrometer or at least 500 micrometer or at least 700 micrometer or at least 1000 micrometer. The maximum thickness of the first layer can be 20 micrometer or 40 micrometer or 50 micrometer or 70 micrometer or 100 micrometer or 200 micrometer or 500 micrometer or 1000 micrometer or 1500 micrometer to the most.

In an embodiment, the first layer can have a thickness of 12 to 15 micrometer and the second layer can have a thickness of 25 micrometer.

The multilayer can provide a reliable adhesion to a paper substrate. The adhesion between the multilayer and the paper substrate can have a reliable peel strength. The multilayer and the paper substrate can build a paper composite.

The multilayer can provide a seal strength. The sealing strength can allow for complex constructions and increased packing line speed, when used for packing.

The thickness of the first layer can be to the most 40-50 % of the overall thickness of the multilayer.

In embodiments, the multilayer comprises three sub-layers with two layers being a first layer and one second layer. The two first layer cover both sides of the second layer. In other words: the second layer is arranged in the middle of two first layer. The first layer can have a thickness of 12 to 15 micrometer and the second layer can have a thickness of 25 micrometer.

In another embodiments, the multilayer comprises three sub-layers with two layers being a second layer and one first layer. The two second layer cover both sides of the first layer. In other words: the first layer is arranged in the middle of two second layer.

The method for producing the multilayer is characterized as the multilayer is produced at least as one of:
- a blown film,
- a cast film and
- by an extrusion-coating-method.

This enables the combined manufacture of the first layer and second layer together in the multilayer.

In embodiments the multilayer is produced by at least one of:
- co-extrusion of the first layer and the second layer;
- thermoforming;
- co-injection moulding;
- compression moulding.

In the co-extrusion mono- as well as multiple component layer structures can be produced.

In the co-injection moulding two or even three components can be utilized to produce the multilayer.

The multilayer as described above can be used for packing, in particular for food packing, in particular for packing coffee.

Especially, biobased plastics in addition principally offer advantages in terms of CO₂ emissions, i.e. the use of compostable food containers with food residues inside, all taken from natural source, can be recycled via composting, suiting a circular economy. Hence there is a need for food containers containing e. g. dry powder or granulate with a function such as brewing of coffee for example, single portion coffee capsules for example.

A packaging can comprise a multilayer a described above.

Further preferred embodiments are evident from the dependent patent claims. Features of the method claims may be combined with features of the device claims and vice versa.

The subject matter of the invention will be explained in more detail in the following text with reference to exemplary embodiments which are illustrated in the attached drawings, in which:
- Figure 1: shows a multilayer;
- Figure 2: shows a multilayer with an additional tie layer; and,
- Figure 3: shows a multilayer with tie layers and a sealing layer;
- Figure 4: shows a multilayer in an integrated tie layer;
- Figure 5: shows a multilayer with a second layer as middle layer; and
- Figure 6: shows a multilayer with a first layer covered by two second layers.

The reference symbols used in the drawings, and their meanings, are listed in summary form in the list of reference symbols. In principle, identical parts are provided with the same reference symbols in the figures.

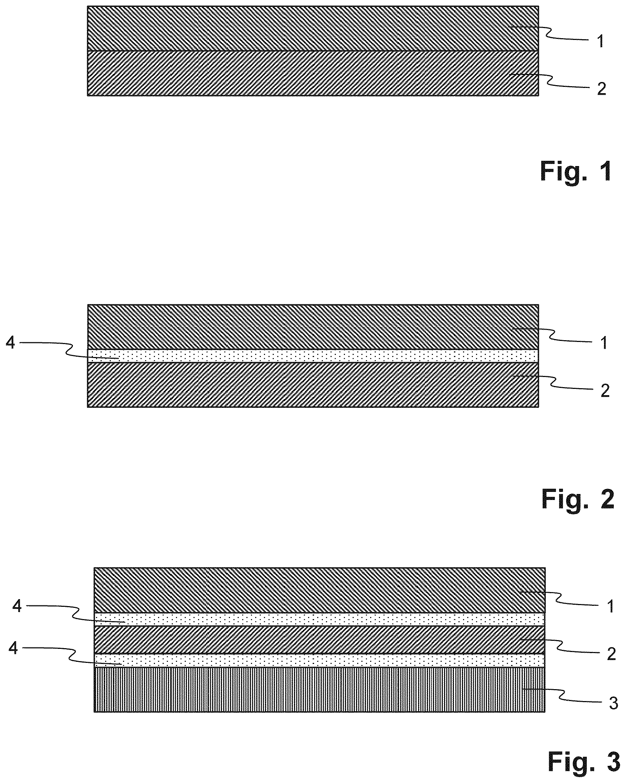

**Fig. 1** shows a multilayer 5 comprising a first layer 1 and a second layer 2. The first layer 1 comprises a water-soluble polymer and a salt. The first layer 1 has an oxygen transmission barrier.

The multilayer 5, in particular the first layer 1 has an oxygen transmission rate of a maximum of 3 cm³/m² per day at room temperature (RT, room temperature = 23°C) and a relative humidity of 50% (rel. H), in particular the oxygen transmission rate can be maximal 1 cm³/m² per day at room temperature and a relative humidity of 50%, in particular maximal 0.2 cm³/m² per day at room temperature (23°C) and a relative humidity of 50%.

The second layer 2 has a water vapor barrier and/or a humidity barrier.

The multilayer, in particular the second layer, has a water vapor and/or humidity barrier of a maximum of 15 g/m² per day at 23°C and a relative humidity of 85%, in particular a maximum of 10 g/m² per day at 23°C and a relative humidity of 85%, in particular 3 /m² per day at 23°C and a relative humidity of 85%.

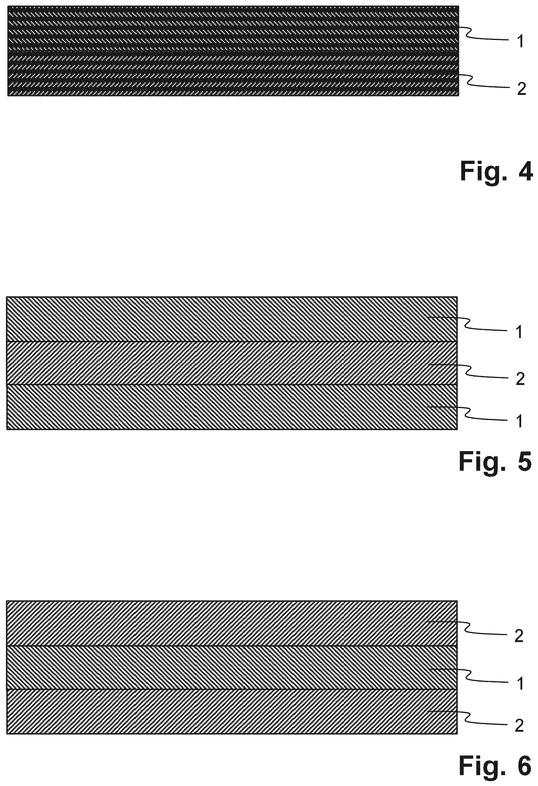

**Fig. 2** shows a similar multilayer 5 with the first layer 1 and the second layer 2. Additionally, a tie layer 4 is arranged between the first layer 1 and the second layer 2. The tie layer 4 can be designed as an additional layer. Furthermore, the tie layer 4 can be designed to be integrated in the first layer 1 and/or second layer 2 as shown in **Fig. 4****.**

**Fig. 3** shows multilayer 5 with an additional sealing layer 3 which is arranged adjacent to the second layer 2. The second layer 2 and the sealing layer 3 are connected by a tie layer 4. As described above the tie layer 4 can be also integrated into the second layer 2 and/or sealing layer 3.

The sealing layer 3 can be designed such that the multilayer 5 can be sealed to a further multilayer 5, in particular to a sealing layer 3 of the multilayer 5.

In particular the further multilayer 5 is identical to the first multilayer 5. This enables to seal the multilayer 5 to its own and producing a pouch of packing from one piece of multilayer 5. In another embodiment the first multilayer 5 and the further multilayer 5 are separate multilayers and can also be sealed together as a pouch of packing.

Fig.5 shows a multilayer 5 with two first layer 1 arranged next to one second layer 2. The second layer 2 is arranged in the middle between two first layer 1.

Fig.6 shows an alternative of a at least tree layered multilayer 5, with two layers being a second layer 2 and one first layer 1. The two second layer 2 cover both sides of the first layer 1. The first layer 1 is arranged in the middle of two second layer.

While the invention has been described in present preferred embodiments of the invention, it is distinctly understood that the invention is not limited thereto, but may be otherwise variously embodied and practised within the scope of the claims.

## Claims

1. Multilayer comprising:
- at least one first layer (1) comprising water-soluble polymer wherein the first layer (1) has an oxygen transmission barrier, wherein the first layer comprises a salt;
- at least one second layer (2) wherein second layer (2) has a water vapor and/or humidity barrier.

2. Multilayer_according to claim 1, wherein the multilayer comprises an oxygen transmission rate of a maximum of 3 cm³/m² per day at 23°C and a relative humidity of 50%, in particular the oxygen transmission rate can be maximal 1 cm³/m² per day at 23°C and a relative humidity of 50%, in particular maximal 0,2 cm³/m² per day at room temperature (23°C) and a relative humidity of 50%.

3. Multilayer according to any of the previous claims, wherein the water-soluble polymer is at least one of poly(vinyl alcohol) (PVOH), cellulose-ether polymer, Butenediol-Vinylalcohol-Copolymer (BVOH), and Ethylene-Vinylalcohol-Copolymers (EVOH).

4. Multilayer according to any of the previous claims, wherein the first layer (1) fulfils at least one of the following conditions:
- the salt comprises a salt of alkaline metals, earth alkaline metals, aluminum containing salt and/or a mixture thereof, in particular NaCl, Na-citrate, and the respective potassium analogues;
- the first layer comprises at least 1 wt%, in particular at least 2 wt%, of the salt;
- the first layer comprises 1-40 wt%, in particular 2-30 wt%, of the salt;
- the first layer comprises a vinyl-alcohol copolymer comprising 1 to 20 mol% of a non-OH group containing comonomer;
- the first layer comprises an inorganic filler;
- the first layer comprises an organic filler;
- the first layer comprises a minimum of 35 wt% of one or more respective vinyl alcohol rich copolymers.

5. Multilayer according to any of the previous claims, wherein the first layer (1) comprises an additive,
in particular the additive is selected from at least a plasticizer and a stabilizer.

6. Multilayer according to any of the previous claims, wherein the second layer (2) fulfils at least one of the following conditions:
- the second layer comprises at least one of the following components:
∘ polyester
∘ aliphatic polyester
∘ poly(hydroxy alkanoates) (PHAs)
∘ polylactic acid (PLA)
∘ polybutylene succinate (PBS)
∘ poly(hydroxy butyrates) (PHB), in particular Poly(3-hydroxy butyrate);
- the second layer comprises polyester, wherein homo- and/or copolyester comprise at least to an extent of 80 wt.% of aliphatic units.
- the second layer comprises an additive,
in particular the additive is selected from at least a plasticizer, a stabilizer and a nucleating agent.

7. Multilayer according to any of the previous claims, wherein at least one of the first layer and the second layer is at least one of bio-degradable and compostable, in particular home compostable.

8. The multilayer can have a water vapor and/or humidity barrier of a maximum of 15 g/m² per day at 23°C and a relative humidity of 85%, in particular a maximum of 10 g/m² per day at 23°C and a relative humidity of 85%, in particular 3 g/m² per day at 23°C and a relative humidity of 85%.

9. Multilayer according to any of the previous claims, wherein the multilayer comprises a sealing layer;
- in particular wherein the sealing layer is essentially identical or similar to the second layer and/or first layer
- in particular wherein the sealing layer comprises at least one of the following components:
∘ polyester
∘ polyurethane(s) or
∘ polycarbonate(s).
∘ aliphatic polyester
∘ poly(hydroxy alkanoates) (PHAs).
∘ vinyl alcohol rich copolymer and/or homopolymer.

10. Multilayer according to any of the previous claims, wherein the multilayer comprises a tie layer for promoting adhesion between the first layer and the second layer.

11. Multilayer according to any of the previous claims, wherein the layers of the multilayer are separable from each other.

12. Multilayer according to any of the previous claims, wherein the salt in the first layer is present as solid material.

13. Method for producing a multilayer according to any of the previous claims,
wherein the multilayer (5) is produced at least as one of a blowen film, a cast film and by an extrusion-coating-method,
in particular wherein the multilayer (5) is produced by at least one of:
- co-extrusion of the first layer 1 and the second layer 2;
- thermoforming;
- co-injection moulding;
- compression moulding.

14. Use of a multilayer according to claims 1-12 for packing, in particular for food packing, in particular for packing coffee.

15. Packaging comprising a multilayer according to claims 1-12.
